# EUROPEAN PATENT APPLICATION

(11) **EP 4 628 901 A1**
(43) Date of publication of application: **08.10.2025**
(21) Application number: 23897656.7
(22) Date of filing: 22.11.2023
(51) Int. Cl.: G01N 35/04

(54) **CONVEYING MECHANISM AND ANALYZING DEVICE**

(30) Priority: 30.11.2022 JP 2022192253
(71) Applicant: FUJIFILM Corporation, Tokyo 106-8620 (JP)
(72) Inventor: MORI, Takaaki, Ashigarakami-gun, Kanagawa 258-8538 (JP); DENAWA, Tatsuyuki, Ashigarakami-gun, Kanagawa 258-8538 (JP)
(74) Representative: Dehns Germany Partnerschaft mbB
(86) International application number: PCT/JP2023/042081
(87) International publication number: WO 2024/117008

(57) **Abstract**

A transport mechanism transports an analysis chip including a body part and a pair of engagement ribs provided to protrude outward from both ends in a width direction of the body part in a transport direction orthogonal to the width direction, the transport mechanism including: a pair of screw shafts disposed parallel to each other along the transport direction, each of which has a shaft body and a helical protrusion helically formed on an outer peripheral surface of the shaft body, and propels the analysis chip in the transport direction by rotating about their axes while the helical protrusions are engaged with the engagement ribs; a transport table that extends along the transport direction and has a plurality of stop positions where the analysis chip is stopped; and a processor that controls rotation of the screw shafts to control movement of the analysis chip between the plurality of stop positions and stopping of the analysis chip at the plurality of stop positions.

## Description

### BACKGROUND OF THE INVENTION

### 1. Field of the Invention

The present disclosure relates to a transport mechanism and an analysis apparatus.

### 2. Description of the Related Art

A micro-total analysis system (µTAS) is known as an analysis apparatus that analyzes a specimen such as a biological sample. The µTAS is an analysis apparatus that uses an analysis chip comprising a micro flow channel, a reaction chamber, a mixing chamber, and the like to perform a series of chemical or biochemical analysis steps within the analysis chip, such as mixing of a specimen and a reagent, a chemical reaction or a biochemical reaction, and detection of a product after the reaction. The analysis chip is loaded into the analysis apparatus, and various processes are executed within the analysis apparatus, such as a specimen dispensing process of dispensing a specimen, a reagent dispensing process of dispensing a reagent, a process for causing a specimen and a reagent to react with each other, and an optical detection process. The analysis chip is transported to each processing unit that executes various processes by a transport mechanism provided in the analysis apparatus.

As a transport mechanism that transports an object to be transported, a configuration is generally known in which the object to be transported is placed on a transport belt, the transport belt is rotated, and the object to be transported is transported for each transport belt, as in a belt conveyor. With the belt conveyor, the object to be transported is stationarily placed on the transport belt and does not move relative to the transport belt, so that the object to be transported can be stably transported. On the other hand, since the belt conveyor needs to be rotated, a structure such as a space for rotating the transport belt and a mechanism for driving the transport belt is required on a back surface of a transport passage, and space saving is difficult.

As a space-saving transport device, a transport device that comprises a screw shaft that includes a shaft body disposed along a transport direction and a ridge helically disposed on an outer periphery of the shaft body, and that transports an object to be transported by rotating the screw shaft is disclosed in JP2013-184801A.

For example, the transport device of JP2013-184801A holds a holder between a pair of screw shafts disposed in parallel, and sends the holder along a transport path to transport a specimen container held by the holder.

### SUMMARY OF THE INVENTION

The transport device of JP2013-184801A transports a holder that holds a specimen container accommodating a specimen in an upright state, and the specimen container is assumed to be a blood collection tube.

On the other hand, the analysis chip for µTAS is, for example, a microchannel device composed of a resin plate having a groove formed on one surface and a resin film bonded to cover the groove, and has a shape significantly different from that of a cylindrical test container such as the blood collection tube assumed in JP2013-184801A. Therefore, it is difficult to directly apply the transport device of JP2013-184801A to transporting an analysis chip having a flat bottom surface, such as the analysis chip for µTAS.

In addition, in a case of transporting the analysis chip for µTAS, it is necessary to stop the analysis chip accurately at a stop position provided corresponding to each processing unit that is disposed along the transport passage and executes various processes.

An object of the present disclosure is to provide a transport mechanism and an analysis apparatus capable of stably transporting an analysis chip and accurately stopping the analysis chip at a stop position.

According to the present disclosure, there is provided a transport mechanism transports an analysis chip including a body part and a pair of engagement ribs provided to protrude outward from both ends in a width direction of the body part in a transport direction orthogonal to the width direction, the transport mechanism comprising: a pair of screw shafts disposed parallel to each other along the transport direction, each of which has a shaft body and a helical protrusion helically formed on an outer peripheral surface of the shaft body, and the pair of screw shafts propels the analysis chip in the transport direction by rotating about their respective axes while the helical protrusion are engaged with the engagement ribs; a transport table that extends along the transport direction and has a plurality of stop positions where the analysis chip is stopped; and a processor that controls rotation of the screw shafts to control movement of the analysis chip between the plurality of stop positions and stopping of the analysis chip at the plurality of stop positions.

The transport mechanism may further comprise: a positioning mechanism that positions the analysis chip, which is stopped at the stop position, at a preset position in the stop position, and it is preferable that the positioning mechanism includes a positioning pin that is inserted through a through-hole penetrating the body part of the analysis chip in an up-down direction, a positioning hole that is provided at the stop position of the transport table and into which a tip of the positioning pin inserted through the through-hole is inserted, and a lifting mechanism that lifts and lowers the positioning pin between an insertion position where the positioning pin is inserted through the through-hole and the tip is inserted into the positioning hole and a retreat position where the positioning pin is moved upward from the insertion position and is retreated from the insertion position.

The processor may be configured to rotate the screw shafts in a forward direction to transport the analysis chip to the stop position and stop the analysis chip, and then reversely rotate the screw shafts to return a phase position of the helical protrusion engaged with the analysis chip to an upstream side in the transport direction within a pitch range of the helical protrusion and release the engagement between the engagement ribs of the analysis chip and the helical protrusions.

In a case of rotating the screw shaft in a forward direction to transport the analysis chip to the stop position, the processor may be configured to stop the transport of the analysis chip at a position where the through-hole of the analysis chip and the positioning hole at least partially overlap each other and a center of the through-hole is located upstream of a center of the positioning hole in the transport direction, and cause the positioning mechanism to lower the positioning pin to the insertion position to send the analysis chip to a downstream side in the transport direction within a pitch range of the helical protrusion and position the analysis chip at the preset position.

It is preferable that a bottom surface of the analysis chip is flat, and the transport table has a transport surface on which the analysis chip is placed with the bottom surface in contact with the transport surface, and the analysis chip is transported while sliding on the transport surface.

It is preferable that the transport mechanism further comprises: a pressing part that presses the engagement rib of the analysis chip placed on the transport table from above.

It is preferable that the pressing part is provided at least at the stop position.

In a case in which the transport table has three or more stop positions as the plurality of stop positions, at least one of intervals between the stop positions adjacent to each other may be different from the other interval, and portions of the screw shaft in a length direction corresponding to the different intervals may have different pitches of the helical protrusions.

According to the present disclosure, there is provided an analysis apparatus comprising: the transport mechanism according to the present disclosure; and a plurality of processing units disposed to correspond to the plurality of stop positions and performing predetermined processing on a specimen accommodated in the analysis chip.

With the transport mechanism and the analysis apparatus of the technology of the present disclosure, it is possible to stably transport the analysis chip and accurately stop the analysis chip at the stop position.

### BRIEF DESCRIPTION OF THE DRAWINGS

Fig. 1 is a schematic view showing a schematic configuration of an analysis apparatus.
Fig. 2 is a perspective view of an analysis chip with a bottom surface facing up.
Fig. 3 is an exploded perspective view of the analysis chip.
Fig. 4 is a perspective view of the analysis chip shown in Fig. 2 with its top and bottom reversed.
Fig. 5 is a perspective view showing a schematic configuration of a transport mechanism.
Fig. 6 is an enlarged plan view showing a part of the transport mechanism.
Fig. 7 is an enlarged perspective view showing a part of a transport table on which the analysis chip is placed.
Fig. 8 is a cross-sectional view showing the analysis chip that is stopped at a stop position and is positioned by a positioning pin.
Fig. 9 is a diagram showing a positional relationship between the analysis chip and a screw shaft immediately after the stop.
Fig. 10 is a diagram showing a positional relationship between the analysis chip and the screw shaft after the screw shaft is rotated reversely.
Fig. 11 is a diagram showing a state in which the analysis chip is stopped at a stop position in a state where a center of a through-hole of the analysis chip is slightly shifted to a downstream side with respect to a center of a positioning hole.
Fig. 12 is a diagram for describing a problem that occurs in a case in which positioning is performed by a positioning mechanism in the state of Fig. 11.
Fig. 13A is a diagram showing a state immediately after the analysis chip is stopped, and Fig. 13B is a diagram showing a state after the positioning mechanism has performed positioning.
Fig. 14 is a perspective view showing a part of the transport mechanism comprising a pressing part.
Fig. 15 is a cross-sectional view taken along a line XV-XV of Fig. 14.
Fig. 16 is an explanatory diagram of a transport mechanism of a modification example.

### DESCRIPTION OF THE PREFERRED EMBODIMENTS

Hereinafter, a transport mechanism and an analysis apparatus comprising the transport mechanism according to one embodiment of the present disclosure will be described with reference to the drawings.

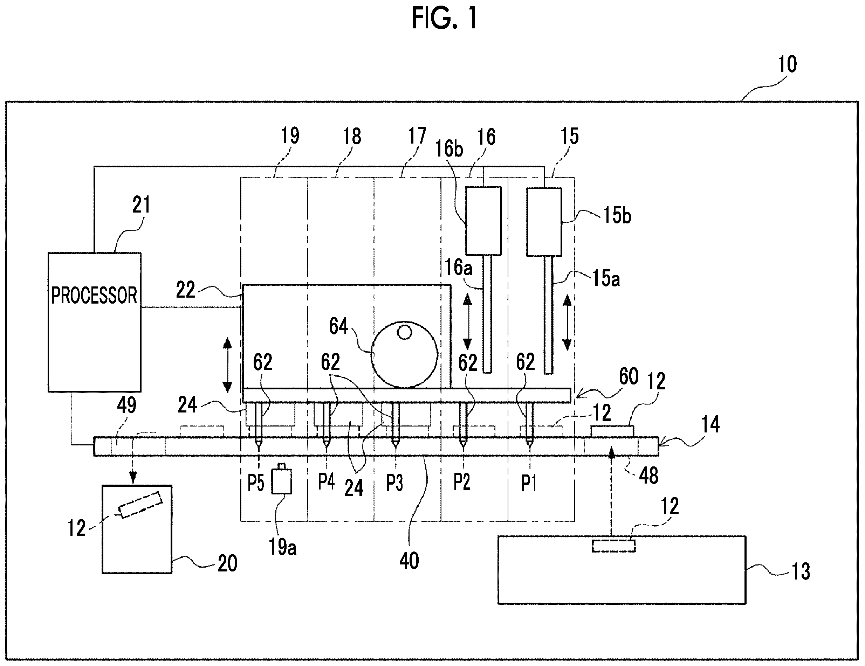

Fig. 1 is a schematic view showing a schematic configuration of an analysis apparatus 10 comprising a transport mechanism 14. The analysis apparatus 10 is, for example, an immunological analysis apparatus that detects a test target substance in a specimen collected from a living body by utilizing an antigen-antibody reaction. The analysis apparatus 10 dispenses a specimen and a reagent to an analysis chip 12, causes mixing and an immune reaction in a microchannel in the analysis chip 12, optically detects the test target substance in the specimen, and outputs a test result.

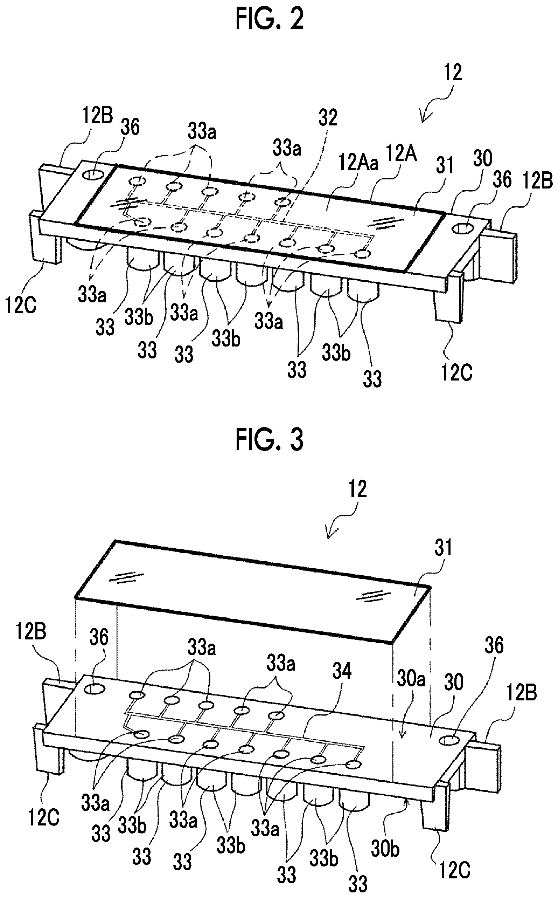

The analysis chip 12 is a microchannel device comprising a microchannel 32 therein (see Fig. 2), and is, for example, an analysis chip for µTAS. As an example, a reagent such as a labeled antibody solution and a buffer solution is introduced into the microchannel 32 in addition to the specimen. In the microchannel 32, an immune complex containing the test target substance in the specimen is generated and bound/free (B/F) separated by isotachophoresis, and separation and fractionation are performed by capillary electrophoresis. Then, the immune complex is irradiated with excitation light, and the fluorescence intensity corresponding to the concentration of the test target substance in the specimen is measured. The specimen is, for example, a biological sample such as blood collected from a living body. First, details of the analysis chip 12 will be described.

### [Analysis chip]

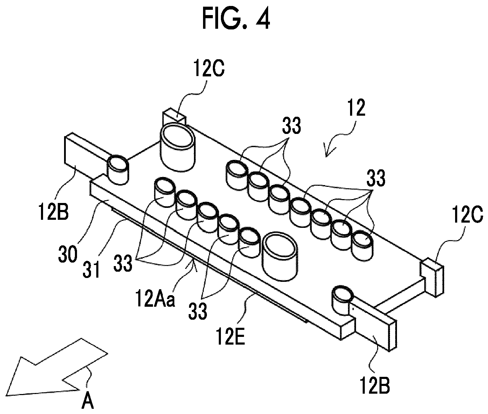

Fig. 2 is a perspective view of the analysis chip 12 with a bottom surface 12Aa facing up. Fig. 3 is an exploded perspective view of the analysis chip 12. Fig. 4 is a perspective view of the analysis chip 12 shown in Fig. 2 with its top and bottom reversed.

As shown in Fig. 2, the analysis chip 12 comprises a body part 12A and a pair of engagement ribs 12B. In the body part 12A, one surface 12Aa is flat. For convenience of description, in Fig. 2, the analysis chip 12 is shown with the bottom surface 12Aa facing up. In a case in which the analysis chip 12 is transported by the transport mechanism 14, the analysis chip 12 is transported with the one surface 12Aa serving as the bottom surface (see Fig. 4). Accordingly, this one surface 12Aa is referred to as the bottom surface 12Aa of the body part 12A of the analysis chip 12. That is, the analysis chip 12 comprises the body part 12A of which the bottom surface 12Aa is flat. The pair of engagement ribs 12B are provided to protrude outward from both ends in a width direction of the body part 12A. Here, the width direction of the body part 12A is a direction orthogonal to a transport direction of the analysis chip 12. In addition, the analysis chip 12 comprises a pair of support ribs 12C that serve as a support portion in a case in which the analysis chip 12 is placed in a posture shown in Fig. 2. The support ribs 12C are provided to protrude outward from both ends in the width direction of the body part 12A, as with the engagement rib 12B, but a protruding width is smaller than that of the engagement rib 12B. The analysis chip 12 comprises the microchannel 32 and a plurality of wells 33 for dispensing a specimen, a reagent, and the like in the microchannel 32.

As shown in Fig. 3, the analysis chip 12 is composed of a resin plate 30 and a film 31.

The resin plate 30 is provided with a groove 34 constituting the microchannel 32 (see Fig. 2) and the plurality of wells 33. The microchannel 32 is, for example, a flow channel having a width of several tens of µm, and the groove 34 is a groove having a width of several tens of µm. The well 33 consists of a through-hole 33a that penetrates from one surface 30a of the resin plate 30 to the other surface 30b which is a back surface thereof, and a cylindrical portion 33b where an opening peripheral edge of the through-hole 33a protrudes from a surface on the other surface 30b side.

The film 31 is bonded to the one surface 30a of the resin plate 30 on which the groove 34 and the well 33 are formed so as to cover the groove 34 and the through-hole 33a (see Figs. 2 and 3). As a result, a portion of the groove 34 and the through-hole 33a that is open on the one surface 30a is sealed. The one surface 30a of the resin plate 30 to which the film 31 is bonded corresponds to the bottom surface 12Aa of the analysis chip 12 (see Fig. 2).

The pair of engagement ribs 12B and support ribs 12C described above are formed on the resin plate 30. In addition, the resin plate 30 comprises a through-hole 36 that is separate from the through-hole 33a of the well 33 and that penetrates the resin plate 30 in an up-down direction in an end part region of the body part 12A adjacent to the engagement rib 12B. The through-hole 36 is a hole through which a positioning pin 62 of the transport mechanism 14, which will be described below, is inserted. In this example, the through-holes 36 are provided at two positions. The through-hole 36 is provided at a position adjacent to the engagement rib 12B in the end part region in the width direction of the body part 12A.

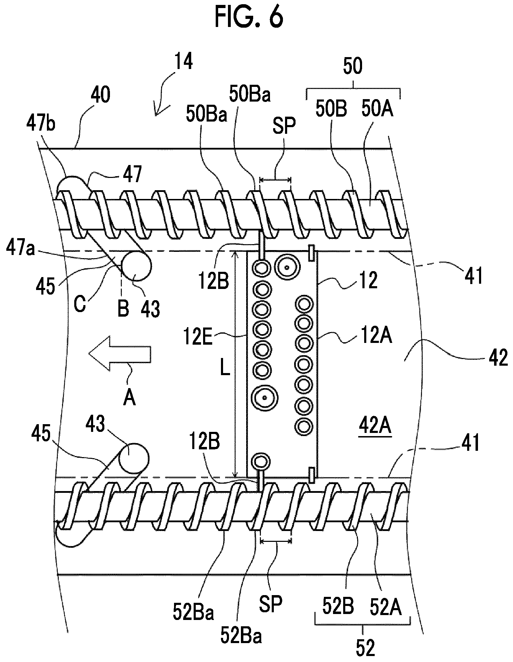

As shown in Fig. 4, the analysis chip 12 is transported in a transport direction A orthogonal to the width direction with the film 31 side as a bottom surface. In addition, the analysis chip 12 is transported in a position in which the engagement rib 12B is at a front end located on a downstream side in the transport direction A, and the support rib 12C is at a rear end located on an upstream side in the transport direction A. A planar shape of the analysis chip 12 is such that a front end portion 12E located on the downstream side in the transport direction A is a straight line in the direction orthogonal to the transport direction A (see Fig. 6).

Returning to Fig. 1, a configuration of the analysis apparatus 10 will be described. The analysis apparatus 10 comprises, for example, a stocker 13 that accommodates a plurality of the analysis chips 12, the transport mechanism 14 that transports the analysis chip 12, a plurality of processing units 15 to 19 that perform predetermined processing on a specimen accommodated in the analysis chip 12, a chip disposal unit 20, and a processor 21.

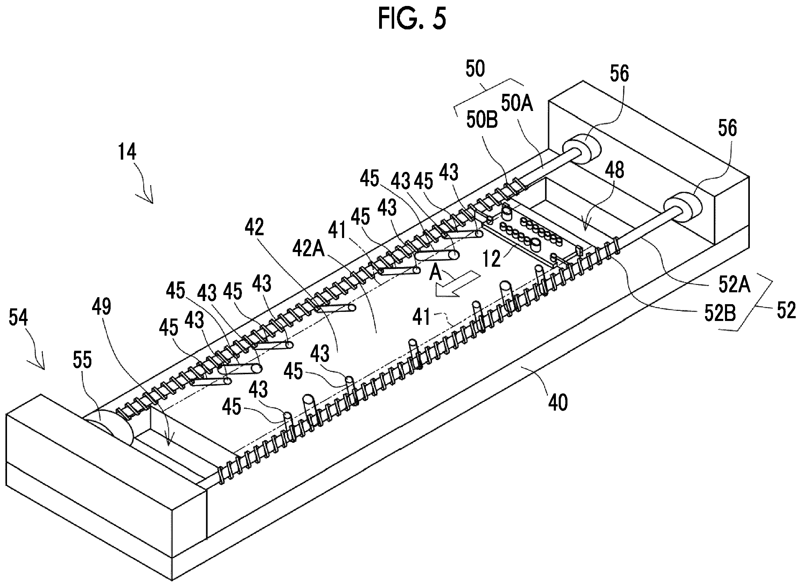

The transport mechanism 14 comprises a transport table 40 extending along the transport direction A of the analysis chip 12 and a pair of screw shafts 50 and 52 (see Fig. 5). Although details of the transport mechanism 14 will be described below, the transport table 40 has a plurality of stop positions P1 to P5 where the analysis chip 12 is stopped. In addition, in this example, the transport mechanism 14 comprises a positioning mechanism 60 that positions the analysis chip 12, which is stopped at the stop positions P1 to P5, at preset positions in the stop positions P1 to P5. The positioning mechanism 60 comprises a positioning pin 62 that positions the analysis chip 12 by inserting its tip into a positioning hole provided at each of the stop positions P1 to P5 of the transport table 40, and a lifting mechanism 64 that lifts and lowers the positioning pin 62. The lifting mechanism 64 lifts the positioning pin 62 between an insertion position where the positioning pin 62 is inserted through the through-hole 36 of the analysis chip 12 and the tip is inserted into the positioning hole and a retreat position where the positioning pin 62 is moved upward from the insertion position and is retreated from the insertion position. The lifting mechanism 64 is, for example, an eccentric cam.

The plurality of analysis chips 12 are stored in the stocker 13 in advance. The analysis chip 12 is taken out from the stocker 13 by a chipset mechanism (not shown) and is set on the transport table 40. The stocker 13 is disposed below an upstream end of the transport table 40, and the analysis chip 12 passes through a chipset opening 48 provided at the upstream end of the transport table 40 and is set on a transport surface 42 (see Fig. 5).

The plurality of processing units 15 to 19 are, for example, a specimen dispensing processing unit 15, a reagent dispensing processing unit 16, a pressurization processing unit 17, a reaction processing unit 18, and a detection processing unit 19. The plurality of processing units 15 to 19 are disposed to correspond to the respective stop positions P1 to P5 along the transport direction A of the analysis chip 12.

The specimen dispensing processing unit 15 comprises a dispensing mechanism 15b comprising a nozzle 15a, and dispenses a specimen into the microchannel 32 of the analysis chip 12 stopped at the stop position P1. A specimen collection tube (not shown) accommodating the collected specimen is loaded into the analysis apparatus 10, and the nozzle 15a sucks the specimen from the specimen collection tube and dispenses the specimen into the microchannel 32 from the predetermined well 33 of the analysis chip 12.

The reagent dispensing processing unit 16 comprises a dispensing mechanism 16b comprising a nozzle 16a, and dispenses a reagent into the microchannel 32 of the analysis chip 12 stopped at the stop position P2. A reagent container (not shown) accommodating the reagent is loaded into the analysis apparatus 10, and the nozzle 16a sucks the reagent from the reagent container and dispenses the reagent into the microchannel 32 from the predetermined well 33 of the analysis chip 12.

In the pressurization processing unit 17, gas is fed through at least a part of the plurality of wells 33 from the outside of the analysis chip 12 to introduce the specimen and the reagent into the microchannel 32 and mix them, so that the inside of the microchannel 32 is pressurized.

In the reaction processing unit 18, a labeled antibody is concentrated, an antigen-antibody reaction is performed, and B/F separation is performed by isotachophoresis.

In the detection processing unit 19, the separation and fractionation of the immune complex are performed by capillary gel electrophoresis method, and then detection processing of detecting the test target substance in the specimen is executed. For example, the test target substance contained in the immune complex is detected by a laser fluorescence method. The detection processing unit 19 comprises an optical head 19a. The optical head 19a is disposed at a position where fluorescence from a predetermined location of the microchannel 32 can be received while irradiating the predetermined location with laser light from the bottom surface 12Aa of the analysis chip 12 in a state where the analysis chip 12 is stopped at the stop position P5. The optical head 19a comprises, for example, an irradiation section and a light receiving section.

The analysis apparatus 10 further comprises a pneumatic section (not shown) that pressurizes and depressurizes the inside of the flow channel and an electrophoresis section 22 for electrophoresis. During the pressurization processing, the reaction processing, and the detection processing, a pressing unit 24 comprising a sealing portion and a supply pipe presses a surface of the analysis chip 12, which comprises the well 33, in order to seal the well 33 or to connect a gas supply pipe to the well 33. The pressing unit 24 can be lifted and lowered by the lifting mechanism between a position where it is separated from the analysis chip 12 and a position where it presses the analysis chip 12. In this example, the lifting mechanism 64 provided in the positioning mechanism 60 of the transport mechanism 14 also serves as the lifting mechanism of the pressing unit 24.

The chip disposal unit 20 accommodates the analysis chip 12 after the analysis has been completed. The chip disposal unit 20 is disposed at a location where the analysis chip 12 that falls from a disposal opening 49 provided at a downstream end of the transport table 40 is received.

The processor 21 constitutes a control unit that integrally controls each unit of the analysis apparatus 10. An example of the processor 21 is a central processing unit (CPU) which performs various types of control by executing a program. The CPU functions as a control unit which controls each unit by executing a program. The processor 21 also serves as a control unit of the transport mechanism 14. The processor 21 functions as a control unit of the transport mechanism 14, and controls a driving unit 54 of the transport mechanism 14, which will be described below. As a result, the processor controls rotation of the screw shafts 50 and 52 to control movement of the analysis chip 12 between the plurality of stop positions P1 to P5 and stopping of the analysis chip 12 at the plurality of stop positions P1 to P5.

Hereinafter, the transport mechanism 14 will be described in detail.

### [Transport Mechanism]

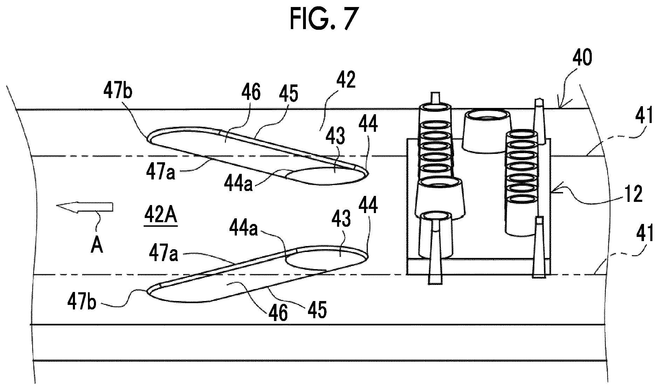

Fig. 5 is a perspective view showing a schematic configuration of the transport mechanism 14, and Fig. 6 is an enlarged plan view showing a part of the transport mechanism 14. In addition, Fig. 7 is an enlarged perspective view showing a part of the transport table 40 on which the analysis chip 12 is placed. The transport mechanism 14 transports the above-described analysis chip 12 in the transport direction A orthogonal to the width direction of the analysis chip 12. The transport mechanism 14 comprises the transport table 40 and the pair of screw shafts 50 and 52.

The transport table 40 has the transport surface 42 on which the bottom surface 12Aa of the analysis chip 12 is placed with the bottom surface 12Aa in contact with the transport surface 42. The analysis chip 12 is transported while sliding on the transport surface 42. That is, the analysis chip 12 is transported by sliding on the transport surface 42 of the transport table 40 in a state where the bottom surface 12Aa of the analysis chip 12 is in contact with the transport surface 42. A temperature of the transport surface 42 may be controlled by temperature control means (not shown). The temperature control means comprises, for example, a heater and a temperature control circuit. In a case in which the analysis chip 12 is transported with the bottom surface 12Aa in contact with the temperature-controlled transport surface 42, the specimen and the reagent accommodated in the analysis chip 12 can be transported while being temperature-controlled. A region of the transport surface 42 with which the bottom surface 12Aa of the analysis chip 12 comes into contact in a case of transporting the analysis chip 12 is referred to as a contact region 42A. The contact region 42A is a region between the pair of screw shafts 50 and 52, and is a region that extends along the transport direction A with a width equivalent to a length L in the width direction of the body part 12A of the analysis chip 12. In Figs. 5 to 7 and the like, a region between two-dot chain lines 41 on the transport surface 42 corresponds to the contact region 42A.

The transport surface 42 has a hole 43 formed in the contact region 42A and a recessed portion 45 formed in at least a part of a periphery of an opening edge 44 of the hole 43. The hole 43 formed in the contact region 42A of the transport surface 42 is a positioning hole into which the tip of the positioning pin 62 is inserted, a hole for fixing screw insertion for fixing the transport table 40 in the analysis apparatus 10, or the like.

The recessed portion 45 has a recessed surface 46 that makes a height of a partial opening edge 44a, which is located on the downstream side in the transport direction A on the entire circumference of the opening edge 44 and includes a contact point C with a tangent B extending in the direction orthogonal to the transport direction A, lower than the transport surface 42, and the recessed surface 46 extends from the partial opening edge 44a to an outside of the contact region 42A (see Figs. 6 and 7).

As shown in Fig. 5, the pair of screw shafts 50 and 52 are disposed on the transport table 40. The pair of screw shafts 50 and 52 are disposed parallel to each other along the transport direction A. The screw shaft 50 has a shaft body 50A and a helical protrusion 50B helically formed on an outer peripheral surface of the shaft body 50A. Similarly, the screw shaft 52 has a shaft body 52A and a helical protrusion 52B helically formed on an outer peripheral surface of the shaft body 52A.

A helical pitch SP of the helical protrusion 50B of one screw shaft 50 and a helical pitch SP of the helical protrusion 52B of the other screw shaft 52 are the same (see Fig. 6). A direction of helical rotation of the helical protrusion 50B of one screw shaft 50 is opposite to a direction of helical rotation of the helical protrusion 52B of the other screw shaft 52. One end of each of the pair of screw shafts 50 and 52 is connected to the driving unit 54 that rotationally drives the screw shafts 50 and 52. The pair of screw shafts 50 and 52 are attached to the driving unit 54 such that phase positions of the helical protrusions 50B and 52B match each other. The driving unit 54 includes, for example, a motor 55 and a plurality of gears (not shown). One end of one screw shaft 50 is connected to the motor 55 such that a driving force of the motor 55 can be directly transmitted as a rotational force. One end of the other screw shaft 52 is connected to one of the plurality of gears, and the driving force of the motor 55 is transmitted as a rotational force via the plurality of gears. The plurality of gears are combined such that a rotation direction of one screw shaft 50 and a rotation direction of the other screw shaft 52 are opposite to each other. The other end of each of the screw shafts 50 and 52 is supported by a bearing unit 56.

The pair of screw shafts 50 and 52 rotate about their axes while the respective helical protrusions 50B and 52B and the pair of engagement ribs 12B are engaged with each other, thereby propelling the analysis chip 12 in the transport direction A.

As shown in Figs. 5 and 6, the analysis chip 12 is placed on the transport surface 42 of the transport table 40 in a posture in which the flat bottom surface 12Aa (see Fig. 2) is in contact with the transport surface 42 and the front end portion 12E extending in the width direction is orthogonal to the transport direction A. In addition, the analysis chip 12 is placed between the pair of screw shafts 50 and 52 disposed parallel to each other. The helical protrusion 50B is a series of convex portions helically formed along an axial direction, and a protrusion portion 50Ba is defined as one convex portion in a case in which the helical protrusion 50B is viewed in a plan view. A plurality of the protrusion portions 50Ba are arranged at equal pitches SP along the axial direction in a case in which the helical protrusion 50B is viewed in a plan view. Similarly, a protrusion portion 52Ba is defined as one convex portion in a case in which the helical protrusion 52B is viewed in a plan view. A plurality of the protrusion portions 52Ba are arranged at equal pitches SP along the axial direction in a case in which the helical protrusion 52B is viewed in a plan view. In the analysis chip 12, one engagement rib 12B is located in a recess portion between two protrusion portions 50Ba adjacent to each other in the axial direction in a case in which a helical groove of the screw shaft 50, more specifically, the helical protrusion 50B is viewed in a plan view. Further, the other engagement rib 12B is placed to be located in a recess portion between two protrusion portions 52Ba adjacent to each other in the axial direction in a case in which a helical groove of the screw shaft 52, more specifically, the helical protrusion 52B is viewed in a plan view (see Fig. 6). An interval of the recess portion between the two adjacent protrusion portions 50Ba is narrower than the pitch SP of the helical protrusion 50B by a width of one protrusion portion 50Ba, but is substantially equal to the pitch SP. An interval between the two adjacent protrusion portions 52Ba is also narrower than the pitch SP of the helical protrusion 52B by a width of one protrusion portion 52Ba, but is substantially equal to the pitch SP.

The engagement between the screw shafts 50 and 52 and the pair of engagement ribs 12B will be described in more detail below. The engagement between the screw shaft 50 and one engagement rib 12B will be described as an example. In a case in which the helical protrusion 50B rotates due to the rotation of the screw shaft 50, a phase of the protrusion portion 50Ba, which is a convex portion of the helical protrusion 50B, and a phase of the recess portion, which is a groove of the adjacent protrusion portion 50Ba, move in the transport direction. As a result, the protrusion portion 50Ba presses the engagement rib 12B from the rear (upstream side), and propels the engagement rib 12B in the axial direction of the screw shaft 50 in accordance with the change in phase of the protrusion portion 50Ba while maintaining a contact state with the engagement rib 12B. The same applies to the engagement between the screw shaft 52 and the other engagement rib 12B. In this way, the screw shafts 50 and 52 are rotated about their axes while the helical protrusions 50B and 52B and the engagement ribs 12B and 12B are engaged with each other, whereby the engagement ribs 12B and 12B are pressed in the axial direction by the helical protrusions 50B and 52B. As a result, the analysis chip 12 is transported in the transport direction A which is the axial direction. In this case, the analysis chip 12 is transported while sliding on the transport surface 42 in a state where the bottom surface 12Aa is in contact with the transport surface 42.

As described above, the processor 21 controls the driving unit 54 to control the rotation of the screw shafts 50 and 52, thereby controlling the movement of the analysis chip 12 between the plurality of stop positions P1 to P5 and the stopping of the analysis chip 12 at the plurality of stop positions P1 to P5.

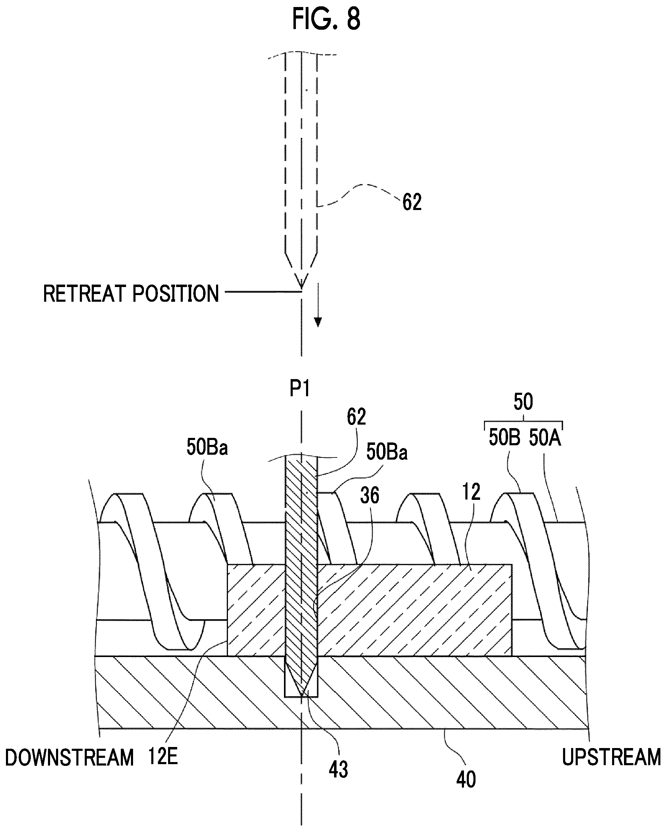

The analysis chip 12 is transported to each of the stop positions P1 to P5 (see Fig. 1), and the above-described various processes are performed on the analysis chip 12 at each of the stop positions P1 to P5. After the analysis chip 12 is transported to each of the stop positions P1 to P5, the positioning mechanism 60 performs positioning before various processes are performed. Fig. 8 is a cross-sectional view showing the analysis chip 12 that is stopped at the stop position P1 and is positioned by the positioning pin 62. The positioning pin 62 is provided to face a positioning hole 43 among the holes 43 provided on the transport surface 42 of the transport table 40. Here, the reference for the stop positions P1 to P5 is the positioning hole 43. The positioning pin 62 is positioned at a retreat position above the transport table 40 during the transport of the analysis chip 12, and is lowered by the lifting mechanism 64 during the positioning. The positioning pin 62 lowered by the lifting mechanism 64 is inserted through the through-hole 36 of the analysis chip 12, and the tip thereof is inserted into the positioning hole 43, as shown in Fig. 8. In a case in which the positioning pin 62 is inserted through the through-hole 36, a position of the analysis chip 12 in the transport direction is adjusted, so that the analysis chip 12 is positioned at a preset position in the stop position P1. Even at the stop positions P2 to P5 other than the stop position P1, the positioning hole 43 is provided on the transport surface 42 of the transport table 40, and the positioning pin 62 of which the tip is inserted into the positioning hole 43 is provided.

Hereinafter, the expression "transporting the analysis chip 12 to each of the stop positions P1 to P5 and stopping the analysis chip 12" means that the analysis chip 12 is stopped at a position where the through-hole 36 and the positioning hole 43 serving as a reference for the stop positions P1 to P5 face each other. Taking the stop position P1 as an example, the stop position P1 has a width in a range where the positioning hole 43 and the through-hole 36 at least partially overlap each other. As described above, the through-hole 36 of the analysis chip 12, and the positioning pin 62 and the positioning hole 43 are provided to position the analysis chip 12 at a preset position in the stop position P1. As shown in Fig. 8, the preset position is a position where the positioning pin 62 is inserted through the through-hole 36 of the analysis chip 12, and is more specifically a position where the center of the through-hole 36 matches the center of the positioning pin 62 and the center of the positioning hole 43. As shown in Fig. 8, at each of the stop positions P1 to P5, in a case in which the positioning pin 62 can be inserted into the through-hole 36, the analysis chip 12 is positioned at a preset position in each of the stop positions P1 to P5. In order to perform such positioning, it is necessary to have a clearance for adjusting a relative positional relationship in the transport direction between the analysis chip 12 and the helical protrusions 50B and 52B in a state where the analysis chip 12 is stopped at each of the stop positions P1 to P5.

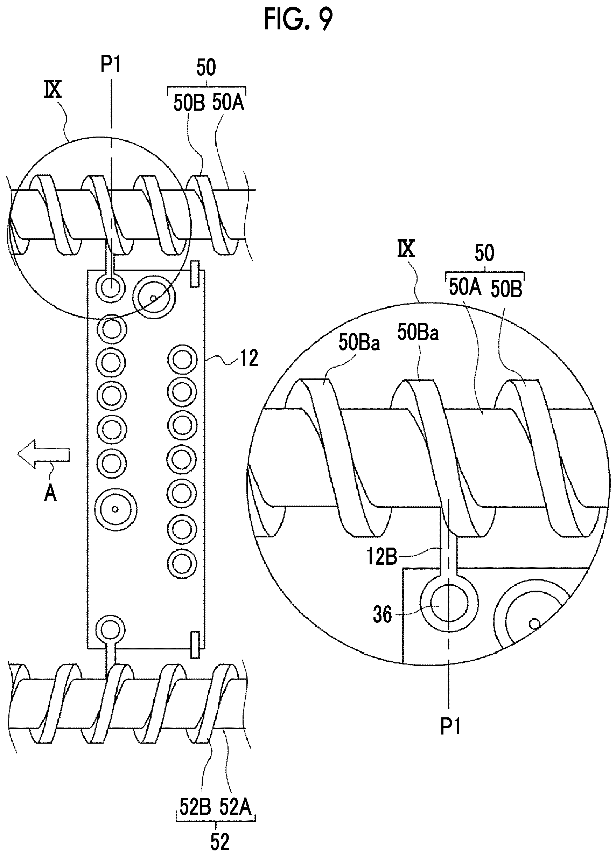

Therefore, the processor 21 executes the following control. The stop position P1 will be described as an example. First, the processor 21 rotates the screw shafts 50 and 52 in a forward direction to transport the analysis chip 12 to the stop position P1 and stop the analysis chip 12. Here, the forward direction is a rotation direction in which the analysis chip 12 can be transported in the transport direction A. As described above, the analysis chip 12 is propelled in the transport direction A such that the rear ends of the engagement ribs 12B are pressed by the helical protrusions 50B and 52B of the screw shafts 50 and 52. Therefore, immediately after the rotation of the screw shafts 50 and 52 is stopped and the transport of the analysis chip 12 is stopped, a state where the rear ends of the engagement ribs 12B are in contact with the helical protrusions 50B and 52B is maintained. This state is shown in detail in a circular enlarged view IX of Fig. 9. Although the enlarged view IX shows the screw shaft 50 as an example, the same applies to the screw shaft 52. The enlarged view IX shows a state where the helical protrusion 50B of the screw shaft 50 and the rear end of the engagement rib 12B of the analysis chip 12 are in contact with each other during the transport and the stop. Here, a state where the protrusion portion 50Ba of the helical protrusion 50B is in contact with the rear end of the engagement rib 12B is referred to as a state where the helical protrusion 50B and the engagement rib 12B are engaged with each other.

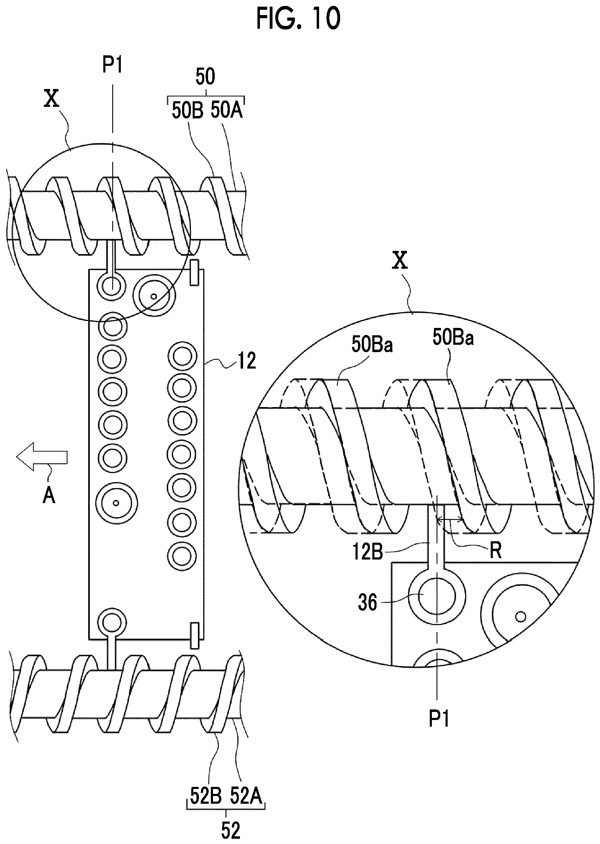

In the present embodiment, the processor 21 transports the analysis chip 12 to the stop position P1 and stops the analysis chip 12, and then reversely rotates the screw shafts 50 and 52. As shown in Fig. 10, due to the reverse rotation of the screw shafts 50 and 52, the phase positions of the helical protrusions 50B and 52B engaged with the analysis chip 12 are returned to the upstream side in the transport direction A within the range of the pitches SP of the helical protrusions 50B and 52B, and a state where the pair of engagement ribs 12B of the analysis chip 12 and the helical protrusions 50B and 52B are engaged with each other is released. As a result, in the stop position P1, it is possible to ensure a clearance for adjusting the relative positional relationship in the transport direction between the helical protrusions 50B and 52B and the analysis chip 12.

In a circular enlarged view X in Fig. 10, a state of the helical protrusion 50B immediately after the stop is shown by a broken line. The amount of rotation in a case in which the screw shafts 50 and 52 are reversely rotated is adjusted such that the amount of movement of the phase positions of the helical protrusions 50B and 52B is within the range of the pitch SP and both the rear end and the front end of the engagement rib 12B do not come into contact with the helical protrusions 50B and 52B. The amount of rotation is, for example, approximately 1/2 rotation or less. In the example of Fig. 10, the phase position of the helical protrusion 50B is retreated by R in the axial direction. The distance R is about 1/2 or less of the pitch SP.

After a state where the engagement ribs 12B of the analysis chip 12 and the helical protrusions 50B and 52B are engaged with each other is released, the positioning pin 62 is lowered to perform positioning (see Fig. 10). At the stop position P1, the positioning pin 62 and the positioning hole 43, and the through-hole 36 at least partially overlap each other. Even in a state where the centers of the positioning pin 62 and the positioning hole 43 do not match the center of the through-hole 36, in a case in which the positioning pin 62 is inserted through the through-hole 36, the analysis chip 12 is moved along the transport direction, and the position of the analysis chip 12 is adjusted. As a result, the analysis chip 12 is positioned at a position where the centers of the positioning pin 62 and the positioning hole 43 match the center of the through-hole 36.

In a state where the analysis chip 12 is positioned at preset positions in the stop positions P1 to P5 of the transport table 40, various processes are executed, such as dispensing a specimen at the stop position P1 and dispensing a reagent at the stop position P2.

As described above, the present transport mechanism 14 comprises the pair of screw shafts 50 and 52 that propel the analysis chip 12 in the transport direction A by rotating about their axes while the helical protrusions 50B and 52B and the engagement ribs 12B and 12B are engaged with each other. With the present configuration, the analysis chip 12 can be stably transported. Since the screw shafts 50 and 52 are rotated to transport the analysis chip 12, space saving can be achieved compared to a transport mechanism that requires a driving unit on a back surface side of a transport table as in a belt conveyor. In addition, since the processor 21 controls the rotation of the screw shafts 50 and 52 to control the movement of the analysis chip 12 between the plurality of stop positions P1 to P5 and the stopping of the analysis chip 12 at the plurality of stop positions P1 to P5, the analysis chip 12 can be accurately stopped at the preset positions in the stop positions P1 to P5.

As described above, in the present analysis apparatus 10, the transport mechanism 14 comprises the positioning mechanism 60. Since the positioning mechanism 60 inserts the positioning pin 62 through the through-hole 36 of the analysis chip 12 and the tip of the positioning pin 62 into the positioning hole 43, the analysis chip 12 can be positioned at the stop positions P1 to P5 with higher accuracy. For example, even in a case in which the analysis chip 12 is stopped with the center of the through-hole 36 slightly deviated from the center of the positioning hole 43, the analysis chip 12 is guided and positioned by the positioning pin 62 such that the center of the through-hole 36 matches the center position of the positioning pin 62 by inserting the positioning pin 62 into the through-hole 36. As described above, even in a case in which the analysis chip 12 is slightly deviated and stopped, the analysis chip 12 is slightly moved and positioned such that the center of the through-hole 36 and the center of the positioning hole 43 match each other, and the analysis chip 12 can be positioned at the stop positions P1 to P5 with extremely high accuracy.

In addition, in the present embodiment, the processor 21 rotates the screw shafts 50 and 52 in the forward direction to transport the analysis chip 12 to the stop positions P1 to P5 and stop the analysis chip 12, and then reversely rotates the screw shafts 50 and 52 before the positioning via the positioning mechanism 60. Due to the reverse rotation of the screw shafts 50 and 52, the phases of the helical protrusions 50B and 52B engaged with the analysis chip 12 are returned to the upstream side in the transport direction A, and a state where the engagement ribs 12B of the analysis chip 12 and the helical protrusions 50B and 52B are engaged with each other is released.

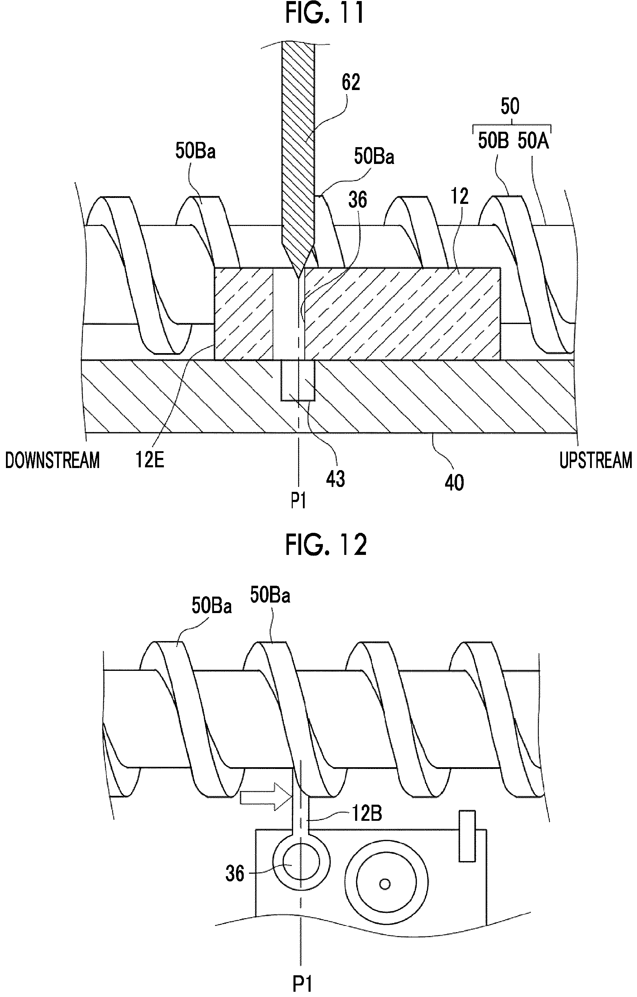

For example, as shown in Fig. 11, in a case in which the center of the through-hole 36 of the analysis chip 12 that is transported to and stopped at the stop position P1 is slightly shifted to the downstream side with respect to the center of the positioning hole 43, in a case in which the positioning pin 62 is inserted through the through-hole 36 of the analysis chip 12 in this state, the analysis chip 12 is guided by the positioning pin 62 such that the center of the through-hole 36 and the center of the positioning hole 43 match each other, and a force in a direction of moving the analysis chip 12 to the upstream side is applied to the analysis chip 12. In a state immediately after the rotation of the screw shafts 50 and 52 in the forward direction is stopped, as shown in Fig. 12, the rear end of the engagement rib 12B of the analysis chip 12 is in contact with the protrusion portion 50Ba of the helical protrusion 50B. Therefore, the movement of the analysis chip 12 to the upstream side is in a restricted state. In a case in which the positioning pin 62 is inserted into the through-hole 36 and a force is applied to shift the analysis chip 12 to the upstream side in a state where the rear end (upstream side) of the engagement rib 12B is in contact with the protrusion portion 50Ba of the helical protrusion 50B and cannot move, a load is applied to the engagement rib 12B, which may cause the engagement rib 12B to be damaged. Figs. 11 and 12 show a relationship between the screw shaft 50 and one engagement rib 12B as an example, and the same applies to a relationship between the screw shaft 52 and the other engagement rib 12B.

On the other hand, in the present embodiment, since the processor 21 performs control of releasing a state where the engagement ribs 12B of the analysis chip 12 and the helical protrusions 50B and 52B are engaged with each other before the positioning via the positioning mechanism 60, an over-constrained state of the analysis chip 12 in the positioning via the positioning pin 62 can be released, and the damage to the analysis chip 12 can be suppressed. Therefore, the occurrence of an error due to the damage to the analysis chip 12 during the analysis can be suppressed, and the analysis efficiency of the analysis apparatus 10 can be improved.

In the above description, an aspect in which the processor 21 rotates the screw shafts 50 and 52 in the forward direction to transport the analysis chip 12 to the stop positions P1 to P5 and stop the analysis chip 12, and then reversely rotates the screw shafts 50 and 52 before the positioning via the positioning mechanism 60 has been described, but, instead of this aspect, the processor 21 may perform the following control.

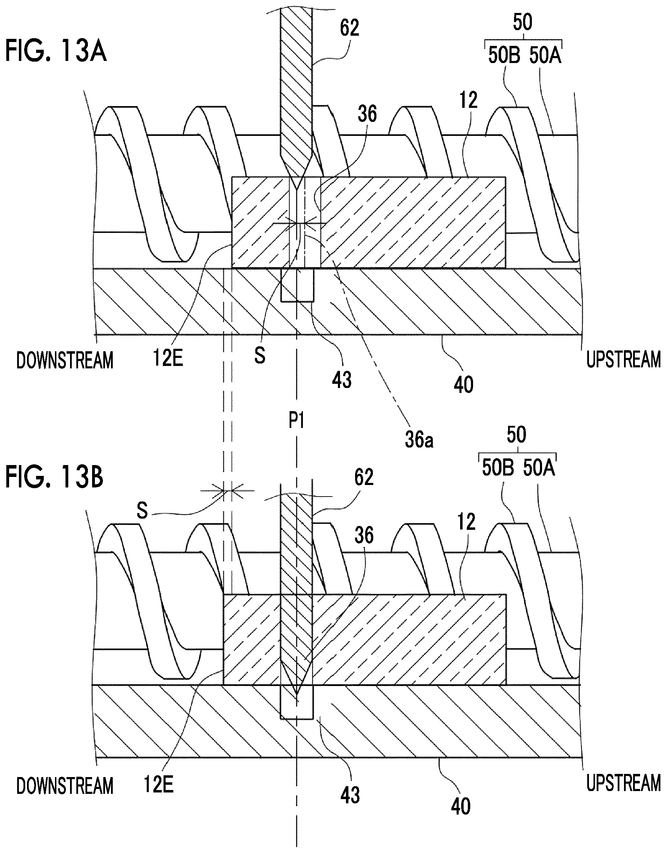

Even in a modification example of the control of the processor 21, the processor 21 rotates the screw shafts 50 and 52 in the forward direction to transport the analysis chip 12 to the stop positions P1 to P5 and stop the analysis chip 12. In the modification example, the processor 21 performs control of stopping the analysis chip 12 at a position where the through-hole 36 of the analysis chip 12 and the positioning hole 43 of the transport table 40 at least partially overlap each other and the center of the through-hole 36 is on the upstream side in the transport direction A with respect to the center of the positioning hole 43 in the stop positions P1 to P5. Fig. 13A is a cross-sectional view showing a positional relationship between the analysis chip 12 and the positioning mechanism 60 in a state where the analysis chip 12 is stopped on the upstream side of the stop position P1 in the transport direction A. As shown in Fig. 13A, the analysis chip 12 is stopped at the stop position P1 such that a center 36a of the through-hole 36 is on the upstream side in the transport direction A with respect to the stop position P1, which is a preset position and is the center of the positioning hole 43. In Fig. 13A, a distance between the center 36a of the through-hole 36 and the center of the positioning hole 43 is S.

In this state, in a case in which the positioning mechanism 60 lowers the positioning pin 62 to the insertion position, as shown in Fig. 13B, the analysis chip 12 is guided by the positioning pin 62, is sent to the downstream side in the transport direction A by the distance S, and is positioned at the preset position.

As described with reference to Figs. 11 and 12, in a case in which the positioning mechanism 60 performs the positioning in a state where the analysis chip 12 is stopped with the center of the through-hole 36 shifted to the downstream side with respect to the center of the positioning hole 43, the analysis chip 12 may be damaged. However, as described above, by controlling the analysis chip 12 such that the analysis chip 12 is stopped at a position where the center of the through-hole 36 is on the upstream side in the transport direction A with respect to the center of the positioning hole 43, the analysis chip 12 is moved to the downstream side during the positioning via the positioning mechanism 60, so that no load is applied to the engagement rib 12B. Accordingly, the damage to the analysis chip 12 can be suppressed.

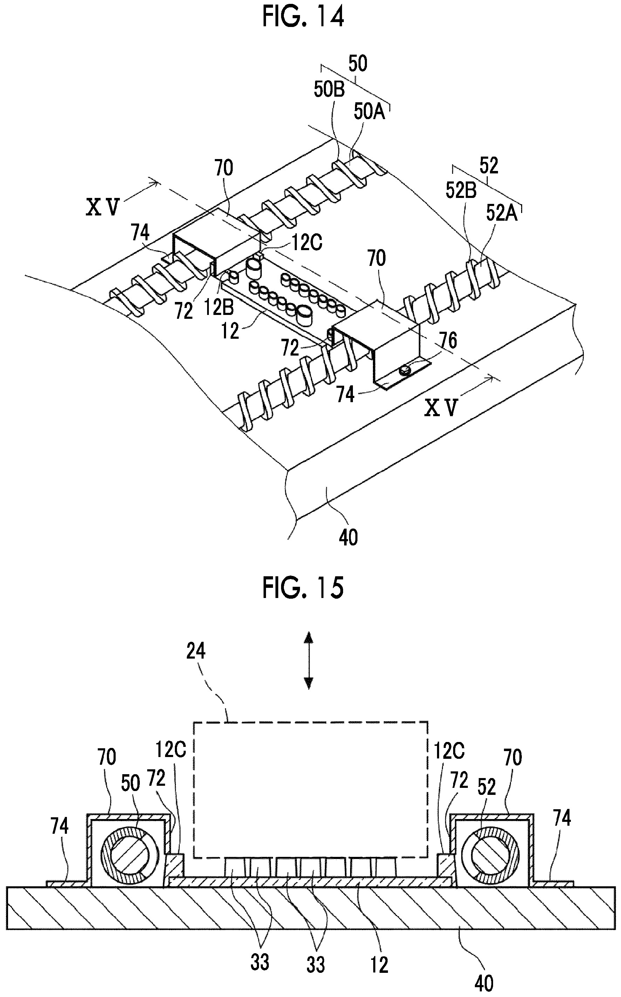

In addition, as shown in Fig. 14, the transport mechanism 14 may further comprise a pressing part 70 that presses the engagement rib 12B of the analysis chip 12 placed on the transport table 40 from above. Fig. 15 is a cross-sectional view taken along a line XV-XV in Fig. 14.

As shown in Figs. 14 and 15, the pressing part 70 is formed by, for example, bending a single plate-shaped member. The pressing part 70 presses the engagement rib 12B and the support rib 12C of the analysis chip 12 from above at one end part 72, is disposed to straddle the screw shafts 50 and 52, and is fixed to the transport table 40 at the other end part 74. A screw hole is provided in the other end part 74, and the other end part 74 is fixed to the transport table 40 by screwing with a screw 76.

As described above, during the pressurization processing, the reaction processing, and the detection processing, the pressing unit 24 comprising a sealing portion and a supply pipe presses the surface of the analysis chip 12, which comprises the well 33, in order to seal the well 33 or to connect a gas supply pipe to the well 33. After performing each processing at each of the stop positions P1 to P5, the pressing unit 24 is lifted to release the contact state between the pressing unit 24 and the analysis chip 12 before transporting the analysis chip 12 to the next stop positions P1 to P5. In this case, it is considered that the analysis chip 12 adheres to the pressing unit 24 and floats up from the transport table 40, and then is peeled off from the pressing unit 24 and falls. In this way, in a case in which the analysis chip 12 floats up and then falls, the impact of the falling may cause liquid splashing, and contamination may occur, which may induce a measurement error. By providing the pressing part 70, it is possible to prevent the analysis chip 12 from floating up in this manner, and as a result, it is possible to suppress a decrease in the analysis accuracy of the analysis apparatus 10.

It is preferable that the pressing part 70 is provided at each of the stop positions P1 to P5. The pressing part 70 may be provided at positions other than the stop positions P1 to P5.

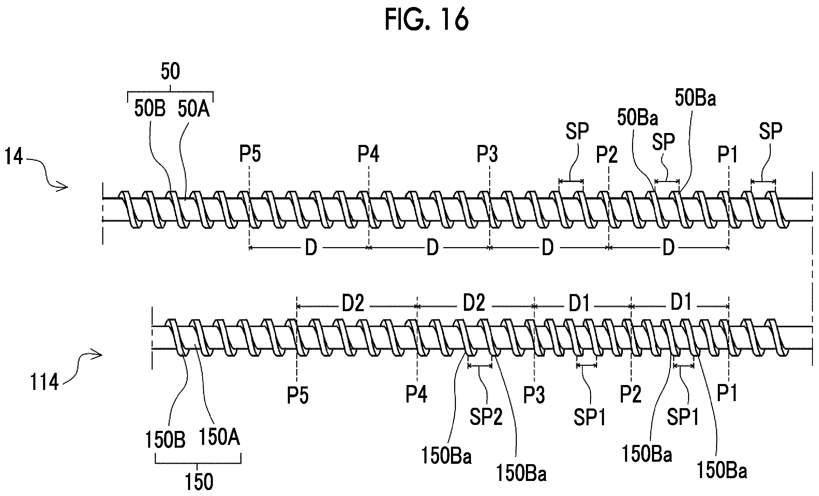

In the transport mechanism 14 described above, intervals D between stop positions adjacent to each other among the plurality of stop positions P1 to P5 are all the same and are equal intervals. Therefore, the pitches SP of the helical protrusions 50B and 52B of the screw shafts 50 and 52 are constant. On the other hand, as in a transport mechanism 114 of a modification example shown in Fig. 16 compared to the transport mechanism 14, the intervals between the stop positions P1 to P5 may be different. In Fig. 16, only one screw shaft 50 of the pair of screw shafts 50 and 52 of the transport mechanism 14 is shown, and, similarly, only one screw shaft 150 of a pair of screw shafts of the transport mechanism 114 is shown. Similarly with the screw shaft 50, the screw shaft 150 has a shaft body 150A and a helical protrusion 150B helically formed on an outer peripheral surface of the shaft body 150A. In the transport mechanism 114, an interval D1 between the stop position P1 and the stop position P2 is the same as an interval D1 between the stop position P2 and the stop position P3, but is different from an interval D2 between the stop position P3 and the stop position P4. For example, in a case in which the spaces of the specimen dispensing processing unit 15 and the reagent dispensing processing unit 16 can be narrower than those of the other processing units 17 to 19, as in the transport mechanism 114 of Fig. 16, the interval D1 between the stop position P1 and the stop position P2 and the interval D1 between the stop position P2 and the stop position P3 may be shorter than the interval D2 between the stop position P3 and the stop position P4 and an interval D2 between the stop position P4 and the stop position P5.

In the transport mechanism 114, a pitch SP1 of the helical protrusion 150B in a portion corresponding to the interval D1 of the screw shaft 150 is different from a pitch SP2 in a portion corresponding to the interval D2. The pitch SP1 is an interval between protrusion portions 150Ba adjacent to each other in the interval D1, and the pitch SP2 is an interval between protrusion portions 150Ba adjacent to each other in the interval D2. Here, the term "a portion" means a portion of the screw shaft 150, means a part over the entire region of the interval D1 (or the interval D2) of the screw shaft 150, and does not mean a part in the interval D1. The pitch SP1 in the relatively short interval D1 is smaller than the pitch SP2 in the relatively long interval D2.

In this way, in a case in which three or more stop positions P1 to P5 are provided, at least one of intervals between the stop positions adjacent to each other may be different from the other interval, and portions of the screw shaft 150 in a length direction corresponding to the different intervals may have different pitches of the helical protrusions 150B. The intervals between the stop positions P1 to P5 can be set according to the processing contents of each processing unit, and space saving can be achieved. As shown in Fig. 16, the transport mechanism 114 in which the intervals between the stop positions P1 to P5 are set to be irregular intervals according to the processing contents can shorten the transport passage compared to the transport mechanism 14 in which the intervals between the stop positions P1 to P5 are set to be regular intervals.

The transport mechanism 14 can be applied to an analysis apparatus other than the analysis apparatus 10 described above, and the analysis chip that can be transported by the transport mechanism 14 is not limited to the analysis chip 12. The analysis chip transported by the transport mechanism 14 may be any analysis chip as long as it comprises at least a body part having a flat bottom surface and a pair of engagement ribs provided to protrude outward from both ends in a width direction of the body part.

In addition, in the above-described embodiment, as a hardware structure of the processor, various processors shown below can be used. The various processors include, in addition to a CPU that is a general-purpose processor that executes software (program) to function as various processing units, a programmable logic device (PLD) of which a circuit configuration can be changed after manufacturing, such as a field-programmable gate array (FPGA), and a dedicated electric circuit that is a processor having a circuit configuration dedicatedly designed for executing specific processing, such as an application specific integrated circuit (ASIC).

The above-described processing may be executed by one of these various processors, or a combination of two or more processors of the same type or different types (for example, a combination of a plurality of FPGAs and a combination of a CPU and an FPGA). In addition, a plurality of processing units may be configured of one processor. As an example in which the plurality of processing units are configured of one processor, there is a form in which a processor that realizes all functions of a system including the plurality of processing units by using one integrated circuit (IC) chip is used, such as a system on chip (SOC).

Furthermore, the hardware structure of the processors is, more specifically, an electric circuit (circuitry) in which circuit elements such as semiconductor elements are combined.

The following appendices are further disclosed with respect to the above embodiment.

### (Appendix 1)

A transport mechanism that transports an analysis chip including a body part and a pair of engagement ribs provided to protrude outward from both ends in a width direction of the body part in a transport direction orthogonal to the width direction, the transport mechanism comprising:
a pair of screw shafts disposed parallel to each other along the transport direction, each of which has a shaft body and a helical protrusion helically formed on an outer peripheral surface of the shaft body, and the pair of screw shafts propels the analysis chip in the transport direction by rotating about their respective axes while the helical protrusions are engaged with the engagement ribs;
a transport table that extends along the transport direction and has a plurality of stop positions where the analysis chip is stopped; and
a processor that controls rotation of the screw shafts to control movement of the analysis chip between the plurality of stop positions and stopping of the analysis chip at the plurality of stop positions.

### (Appendix 2)

The transport mechanism according to Appendix 1, further comprising:
a positioning mechanism that positions the analysis chip, which is stopped at the stop position, at a preset position in the stop position,
in which the positioning mechanism includes a positioning pin that is inserted through a through-hole penetrating the body part of the analysis chip in an up-down direction, a positioning hole that is provided at the stop position of the transport table and into which a tip of the positioning pin inserted through the through-hole is inserted, and a lifting mechanism that lifts and lowers the positioning pin between an insertion position where the positioning pin is inserted through the through-hole and the tip is inserted into the positioning hole and a retreat position where the positioning pin is moved upward from the insertion position and is retreated from the insertion position.

### (Appendix 3)

The transport mechanism according to Appendix 2,
in which the processor is configured to rotate the screw shafts in a forward direction to transport the analysis chip to the stop position and stop the analysis chip, and then reversely rotate the screw shafts to return a phase position of the helical protrusion engaged with the analysis chip to an upstream side in the transport direction within a pitch range of the helical protrusion and release the engagement between the engagement ribs of the analysis chip and the helical protrusions.

### (Appendix 4)

The transport mechanism according to Appendix 2,
in which, in a case of rotating the screw shaft in a forward direction to transport the analysis chip to the stop position, the processor is configured to
stop the transport of the analysis chip at a position where the through-hole of the analysis chip and the positioning hole at least partially overlap each other and a center of the through-hole is located upstream of a center of the positioning hole in the transport direction, and
cause the positioning mechanism to lower the positioning pin to the insertion position to send the analysis chip to a downstream side in the transport direction within a pitch range of the helical protrusion and position the analysis chip at the preset position.

### (Appendix 5)

The transport mechanism according to any one of Appendices 1 to 4,
in which a bottom surface of the analysis chip is flat, and
the transport table has a transport surface on which the analysis chip is placed with the bottom surface in contact with the transport surface, and the analysis chip is transported while sliding on the transport surface.

### (Appendix 6)

The transport mechanism according to any one of Appendices 1 to 5, further comprising:
a pressing part that presses the engagement rib of the analysis chip placed on the transport table from above.

### (Appendix 7)

The transport mechanism according to Appendix 6,
in which the pressing part is provided at least at the stop position.

### (Appendix 8)

The transport mechanism according to any one of Appendices 1 to 7,
in which the transport table has three or more stop positions as the plurality of stop positions, and
at least one of intervals between the stop positions adjacent to each other is different from the other interval, and portions of the screw shaft in a length direction corresponding to the different intervals have different pitches of the helical protrusions.

### (Appendix 9)

An analysis apparatus comprising:
the transport mechanism according to any one of Appendices 1 to 8; and
a plurality of processing units disposed to correspond to the plurality of stop positions and performing predetermined processing on a specimen accommodated in the analysis chip.

The disclosure of Japanese Patent Application No. 2022-192253 filed on November 30, 2022 is incorporated in the present specification by reference. All documents, patent applications, and technical standards mentioned in the present specification are incorporated herein by reference to the same extent as in a case in which each document, each patent application, and each technical standard are specifically and individually described by being incorporated by reference.

### Explanation of References

10: analysis apparatus
12: analysis chip
12A: body part
12Aa: bottom surface
12B: engagement rib
12C: support rib
12E: front end portion
13: stocker
14: transport mechanism
15: specimen dispensing processing unit
15a: nozzle
15b: dispensing mechanism
16: reagent dispensing processing unit
16a: nozzle
16b: dispensing mechanism
17: pressurization processing unit
18: reaction processing unit
19: detection processing unit
19a: optical head
20: chip disposal unit
21: processor
22: electrophoresis section
24: pressing unit
30: resin plate
30a: one surface
30b: the other surface
31: film
32: microchannel
33: well
33a: through-hole
33b: cylindrical portion
34: groove
36: through-hole
36a: center
40: transport table
41: two-dot chain line
42: transport surface
42A: contact region
43: hole (positioning hole)
44: opening edge
44a: partial opening edge
45: recessed portion
46: recessed surface
48: chipset opening
49: disposal opening
50: screw shaft
50A: shaft body
50B: helical protrusion
50Ba: protrusion portion
52: screw shaft
52A: shaft body
52B: helical protrusion
52Ba: protrusion portion
54: driving unit
55: motor
56: bearing unit
60: positioning mechanism
62: positioning pin
64: lifting mechanism
70: pressing part
72: one end part
74: the other end part
76: screw
114: transport mechanism
150: screw shaft
150A: shaft body
150B: helical protrusion
150Ba: protrusion portion
A: transport direction
B: tangent
C: contact point
P1 to P5: stop position
R: distance
S: distance
SP, SP1, SP2: pitch

## Claims

1. A transport mechanism that transports an analysis chip including a body part and a pair of engagement ribs provided to protrude outward from both ends in a width direction of the body part in a transport direction orthogonal to the width direction, the transport mechanism comprising:
a pair of screw shafts disposed parallel to each other along the transport direction, each of which has a shaft body and a helical protrusion helically formed on an outer peripheral surface of the shaft body, and the pair of screw shafts propels the analysis chip in the transport direction by rotating about their respective axes while the helical protrusions are engaged with the engagement ribs;
a transport table that extends along the transport direction and has a plurality of stop positions where the analysis chip is stopped; and
a processor that controls rotation of the screw shafts to control movement of the analysis chip between the plurality of stop positions and stopping of the analysis chip at the plurality of stop positions.

2. The transport mechanism according to claim 1, further comprising:
a positioning mechanism that positions the analysis chip, which is stopped at the stop position, at a preset position in the stop position,
wherein the positioning mechanism includes a positioning pin that is inserted through a through-hole penetrating the body part of the analysis chip in an up-down direction, a positioning hole that is provided at the stop position of the transport table and into which a tip of the positioning pin inserted through the through-hole is inserted, and a lifting mechanism that lifts and lowers the positioning pin between an insertion position where the positioning pin is inserted through the through-hole and the tip is inserted into the positioning hole, and a retreat position where the positioning pin is moved upward from the insertion position and is retreated from the insertion position.

3. The transport mechanism according to claim 2,
wherein the processor is configured to rotate the screw shafts in a forward direction to transport the analysis chip to the stop position and stop the analysis chip, and then reversely rotate the screw shafts to return a phase position of the helical protrusion engaged with the analysis chip to an upstream side in the transport direction within a pitch range of the helical protrusion and release the engagement between the engagement ribs of the analysis chip and the helical protrusions.

4. The transport mechanism according to claim 2,
wherein, in a case of rotating the screw shaft in a forward direction to transport the analysis chip to the stop position, the processor is configured to
stop the transport of the analysis chip at a position where the through-hole of the analysis chip and the positioning hole at least partially overlap each other, and a center of the through-hole is located upstream of a center of the positioning hole in the transport direction, and
cause the positioning mechanism to lower the positioning pin to the insertion position to send the analysis chip to a downstream side in the transport direction within a pitch range of the helical protrusion and position the analysis chip at the preset position.

5. The transport mechanism according to claim 1,
wherein a bottom surface of the analysis chip is flat, and
the transport table has a transport surface on which the analysis chip is placed with the bottom surface in contact with the transport surface, and the analysis chip is transported while sliding on the transport surface.

6. The transport mechanism according to any one of claims 1 to 5, further comprising:
a pressing part that presses the engagement rib of the analysis chip placed on the transport table from above.

7. The transport mechanism according to claim 6,
wherein the pressing part is provided at least at the stop position.

8. The transport mechanism according to any one of claims 1 to 5,
wherein the transport table has three or more stop positions as the plurality of stop positions, and
at least one of intervals between the stop positions adjacent to each other is different from the other interval, and portions of the screw shaft in a length direction corresponding to the different intervals have different pitches of the helical protrusions.

9. An analysis apparatus comprising:
the transport mechanism according to claim 1; and
a plurality of processing units disposed to correspond to the plurality of stop positions and performing predetermined processing on a specimen accommodated in the analysis chip.
